Europäisches Patentamt

European Patent Office

Office européen des brevets

(19)

(11) Veröffentlichungsnummer : **0 151 256**
**B1**

(12) **EUROPÄISCHE PATENTSCHRIFT**

(45) Veröffentlichungstag der Patentschrift :
04.05.88

(21) Anmeldenummer : 84114850.5

(22) Anmeldetag : 06.12.84

(51) Int. Cl.⁴ : **G 11 B 23/03**, G 11 B 33/14,
G 11 B 17/038

(54) Gehäuse für einen Magnetplattenspeicher mit beidseitig gelagertem Plattenstapel.

(30) Priorität : 07.02.84 DE 3404223

(43) Veröffentlichungstag der Anmeldung :
14.08.85 Patentblatt 85/33

(45) Bekanntmachung des Hinweises auf die Patenterteilung : 04.05.88 Patentblatt 88/18

(84) Benannte Vertragsstaaten :
AT CH DE FR GB IT LI NL

(56) Entgegenhaltungen :
EP-A- 0 064 731
US-A- 4 363 056
PATENTS ABSTRACTS OF JAPAN, Band 6, Nr. 59, 16.
April 1982.
MINI-MICRO SYSTEMS, Band 30, Nr. 2, Februar 1983,
Seiten 143-148, Denver, Colorado; US; J. SWARTZ:
"Motor in spindle gives micro-Winchester room for
140M bytes"

(73) Patentinhaber : Siemens Aktiengesellschaft Berlin
und München
Wittelsbacherplatz 2
D-8000 München 2 (DE)

(72) Erfinder : Biermeier, Johann, Dipl.-Ing.
Joergstrasse 82
D-8000 München 21 (DE)
Erfinder : Brand, Wilhelm, Dipl.-Ing.
Turnerweg 21 B
D-8200 Rosenheim (DE)

**Beschreibung**

Die Erfindung bezieht sich auf ein Gehäuse für einen Magnetplattenspeicher gemäß dem Oberbegriff des Hauptanspruches. Ein derartiges Gehäuse ist aus « MINI-MICROSYSTEMS », Band 30, Nr 2, Febr. 1983, S. 143-148 bekannt.

Bei Magnetplattenspeichern unterscheidet man gewöhnlich zwischen Festplattenspeichern und Wechselplattenspeichern. Die technische Entwicklung geht weiterhin ständig zu höheren Speicherkapazitäten, einerseits sowohl hinsichtlich der Spurdichte und der Bitdichte als Charakteristik für die Speicherkapazität pro Plattenfläche, als auch hinsichtlich des mechanischen Aufbaus, um möglichst viele Magnetplatten in einem vorgegebenen Einbauraum unterzubringen. Ein Beispiel dafür ist der sogenannte 5 1/4 Zoll Festplattenspeicher, dessen Magnetplatten nach Industriestandard einen Außendurchmesser von 130 mm und einen Innendurchmesser von 40 mm aufweisen. Für diesen Speichertyp hat sich als Standard in Analogie zu den Abmessungen von konkurrierenden Floppy Disk Laufwerken ein Einbauraum mit einer Einbauhöhe von 82,5 mm und einer Grundfläche von 146 mm × 203 mm als Einheitsgröße herausgebildet, der für das gesamte Gerät einschließlich Gehäuse und die zugehörige Elektronik zur Verfügung steht.

Dem Entwicklungsziel nach höheren Speicherkapazitäten ordnet sich, neben dem Bemühen, die Aufzeichnungsdichte auf den Magnetplatten selbst zu erhöhen, das Bestreben unter, möglichst viele Magnetplatten in diesem vorgegebenen Einbauraum unterzubringen. Im Sinne dieses konstruktiven Bestrebens sind Ausführungen von 5 1/4 Zoll Festplattenspeichern bekannt geworden, bei denen der Antriebsmotor für den Plattenstapel soweit miniaturisiert und derart konstruktiv ausgelegt ist, daß er selbst bei einem vorgegebenen Innendurchmesser der Speicherplatten von 40 mm immer noch in die Nabe des Plattenstapels einzubauen ist. Damit ist ein die Bauhöhe von konventionellen Festplattenspeichern wesentlich mitbestimmendes Element in die Nabe des Magnetplattenstapels integriert und somit die für den Plattenstapel nutzbare Einbauhöhe erweitert. Auf diese Weise sind nach heutigen Gegebenheiten der Größe der kombinierten Magnetköpfe und der Plattendicke Plattenstapel möglich geworden, die bis zu acht Magnetplatten übereinander gestapelt enthalten. Die restliche Einbauhöhe wird für das Gehäuse und die Geräteelektronik benötigt.

Der anzustrebende kompakte Aufbau und die gewünschte hohe Aufzeichnungsdichte auf den Magnetplatten bedingen besondere konstruktive Maßnahmen, um bei vertretbaren Fertigungskosten ausreichende Betriebssicherheit zu gewährleisten. Bei den Abmessungen des Plattenstapels kann diese nur mit einem möglichst starren Gehäuse und einer schwingungssteif ausgelegten Lagerung des Plattenstapels erreicht werden.

Was die Lage der Trennebene zwischen Tragwanne und Deckel betrifft, bestehen prinzipiell zwei Möglichkeiten : Die Trennebene kann, wie in der eingangs genannten Druckschrift beschrieben, vertikal zur Plattenstapelachse verlaufen oder sie kann parallel zur Plattenstapelachse angeordnet sein. Eine derartige konstruktive Ausbildung ist beispielsweise aus EP-A-0 064 731 bekannt. Eine derartige Lage der Trennebene ist allerdings bisher nur im Zusammenhang mit Magnetplattenspeichern bekannt geworden, die Linearpositionierer aufweisen.

Der vorliegenden Erfindung liegt daher die Aufgabe zugrunde, einen derartigen Gehäuseaufbau für einen Magnetplattenspeicher mit fertigungstechnisch geringem Aufwand zu schaffen, um bei entsprechenden Kosten pro Bit gegenüber konkurrierenden Festplattenspeichern und Floppy Disk Laufwerken einen Vorteil zu erzielen. In diesem Zusammenhang ist es wesentlich, den Aufbau des Magnetplattenspeichers so zu gestalten, daß eine baugruppenorientierte Fertigung möglich wird, die eine einfache Montage und Wartung zuläßt. Das bedeutet, Plattenstapel und Magnetkopfpositionieranordnung, im vorliegenden Fall als Drehpositionierer ausgebildet, sollen als Module vormontiert als vollständige und getestete Einheit in das Gehäuse eingebaut werden und gegebenenfalls auch als Modul einfach austauschbar sein.

Diese Aufgabe wird gemäß der vorliegenden Erfindung bei dem eingangs genannten Gehäuse für einen Magnetplattenspeicher mit den im Kennzeichen des Patentanspruches 1 beschriebenen Merkmalen gelöst.

Es ist eine wesentliche Eigenschaft dieser konstruktiven Lösung, daß die Formgebung der Tragschale einerseits die geforderte Stabilität gegenüber Schwingungen im Betrieb sicherstellt und andererseits die Voraussetzungen dafür schafft, daß gekettete Toleranzen möglichst vermieden werden. Das ist dadurch gegeben, daß alle wesentlichen Bezugsmaße, die die eindeutige Parallelität und Konzentrizität der Lagerstellen des Plattenstapels bestimmen und die außerdem die geometrische Zuordnung des Plattenstapels und des Drehpositionierers festlegen, in ein und demselben Teil des Gehäuses liegen. So können ohne weiteres mit fertigungstechnisch vertretbarem Aufwand einander zugeordnete Zentrieransätze oder Montageanschläge in den verschiedenen Ebenen der Tragschale vorgesehen werden, mit denen beim Zusammenbau des Magnetplattenspeichers komplizierte Justagen vermieden werden.

Die Wahl der Trennebene zwischen der Tragschale und dem Deckel des Gehäuses, die auch eine dieser bestimmenden Bezugsebenen für die Toleranzen bildet, sorgt einerseits dafür, daß der Anschraubbereich für den Drehpositionierer in der Stirnwand der Tragschale nicht zu tief liegt, was fertigungstechnisch bei der Herstellung der Tragschale und auch bei der Montage des Drehpositionierers ungünstig wäre. Andererseits ermöglicht dieses Merkmal der diagonalen Lage der Trennebene eine gute Zugänglichkeit des Magnetplattenspeichers bei abgenommenem Deckel. Staubfreiheit vorausgesetzt, kann das Gerät auch in diesem Zustand in Betrieb genommen werden. Damit kann unter optimalen Bedingungen der Plattenstapel ausgewuchtet werden, und Servoinformation kann im fertig montierten Zustand eingeschrieben werden, darüber hinaus sind allgemeine Funktionskontrollen möglich. Wegen der Staubempfindlichkeit der Magnetplatten ist es normalerweise nicht vorgesehen, den Magnetplattenspeicher vor Ort zu öffnen, um dort gegebenenfalls Wartungsarbeiten vorzunehmen. Trotzdem ist es von unbestreitbarem Vorteil für die Ausführungen von Montage- und Wartungsvorgänge, wenn dabei der Magnetplattenstapel und die Positioniereinrichtung voll zugänglich sind. Nur so lassen sich bestimmte Tests und Kontrollen wirklich unter Betriebsbedingungen durchführen.

Darüber hinaus weist die vorzugsweise als Gußteil hergestellte Tragschale ausreichende Querschnitte auf, die nicht nur die gewünschte Schwingungssteifigkeit garantieren, sondern auch einen raschen Temperaturausgleich erleichtern. Damit werden unerwünschte ungleichmäßige Wärmedehnungen reduziert, die eine der Fehlerquellen im Betrieb eines Magnetplattenspeichers bilden.

Im folgenden wird ein Ausführungsbeispiel der Erfindung anhand der Zeichnung näher beschrieben. Dabei zeigt :

Fig. 1 in einer Ansicht von unten ein Gehäuse für einen Magnetplattenspeicher mit einer wannenförmigen Tragschale, die den Magnetplattenstapel aufnimmt und mit einem darauf aufgesetzten Deckel, der teilweise aufgeschnitten ist,

Fig. 2 einen Schnitt durch das Gehäuse längs einer in Fig. 1 gezeigten Schnittlinie II ... II, wobei der Plattenstapel aus Gründen der Übersichtlichkeit im wesentlichen nicht geschnitten, sondern in einer Ansicht dargestellt ist und

Fig. 3 wiederum in einer nun teilweise geschnittenen Ansicht von unten bei abgenommenem Deckel nur die Tragschale mit der Anordnung von Plattenstapel und Drehpositionierer.

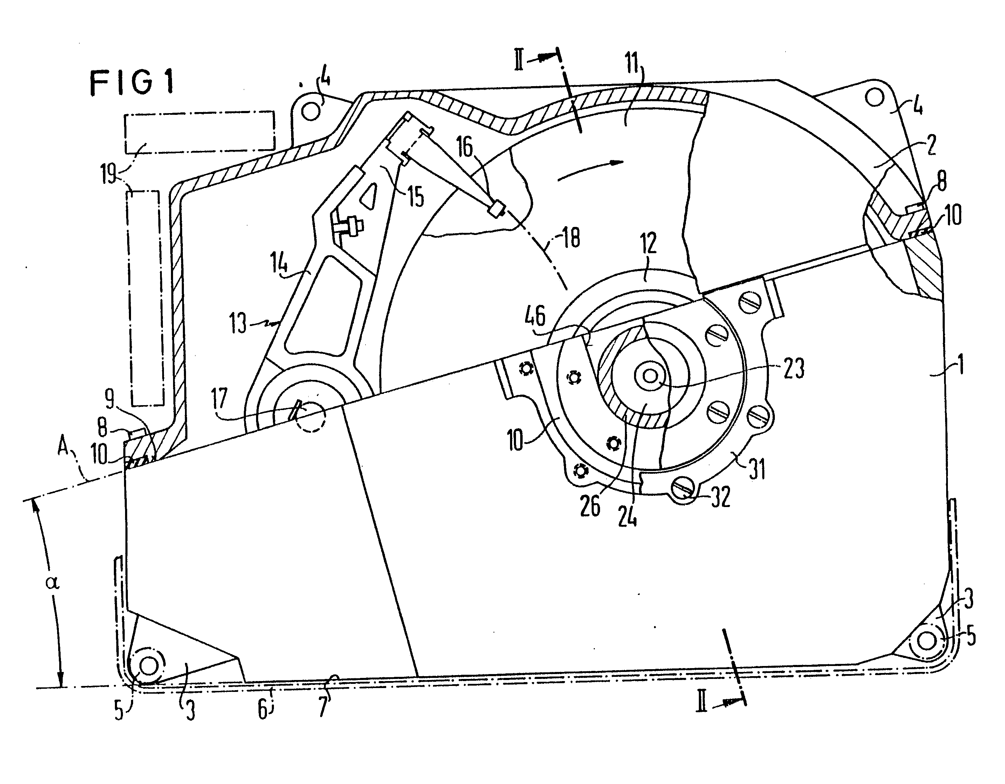

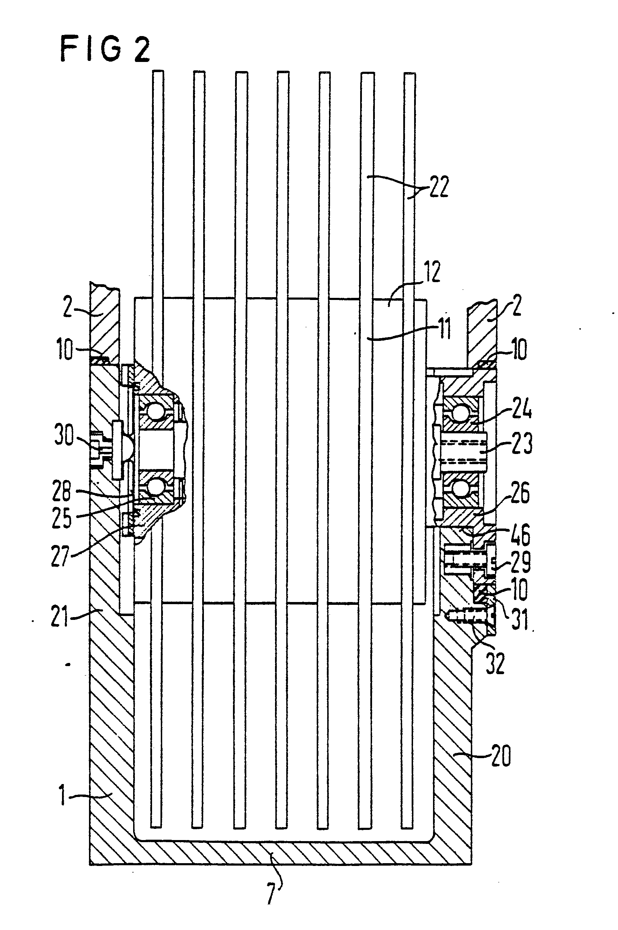

Fig. 1 stellt eine Ansicht des Gehäuses eines Magnetplattenspeichers von unten dar, das längs einer diagonal verlaufenden Trennebene A in eine Tragschale 1 und einen Deckel 2 unterteilt ist. Fig. 2 zeigt einen entsprechenden Schnitt. Das Gehäuse ist ein im wesentlichen rechteckförmiger Kasten. Die Tragschale 1 und der Deckel 2 besitzen jeweils Befestigungsösen 3 bzw. 4, mit denen das Gehäuse, wie schematisch angedeutet, über Gummipuffer 5 in einem umlaufenden Rahmen 6 federnd nachgiebig aufgehängt werden kann. Über diesen Rahmen kann z. B. Teil der Magnetplattenspeicher in ein datenverarbeitendes Gerät eingebaut werden.

Der Deckel 2 sitzt in der genannten Trennebene A, die zu einer Stirnfläche 7 der Tragschale 1 um einen Winkel α geneigt ist, auf der Tragschale 1 auf und ist mit dieser durch Befestigungsschrauben 8 lösbar verbunden. Die Verbindung zwischen Deckel und Tragschale soll staubdicht sein und zugleich eine ausreichende Abschirmung gegen hochfrequente Störsignale schaffen. Zu diesem Zweck ist der in der Trennebene A liegende Rand des Deckels 2 so ausgebildet, daß er eine plane metallische Dichtfläche 9 und eine außen liegende Fase aufweist, in die eine umlaufende Dichtung 10 eingelegt ist. Beim Aufschrauben des Deckels 2 auf die Tragschale 1 legt sich die Dichtfläche 9 an den Rand der Tragschale 1 an und sorgt damit für die hochfrequente Abschirmung, zugleich wird die elastische Dichtung 10 eingequetscht und die gewünschte staubfreie Abdichtung erzielt.

Der Deckel 2 ist teilweise aufgeschnitten dargestellt, um die beschriebene Lösung des Dichtproblems aber auch das Innere des Magnetplattenspeichers und damit seine wesentlichen Baueinheiten zu zeigen. Durch den Teilschnitt ist ein Plattenstapel 11 sichtbar, der — wie schematisch angedeutet ist — auf einer Nabe 12 angeordnet ist und in Pfeilrichtung umläuft. Seitlich neben dem Plattenstapel 11 ist ein Drehpositionierer 13 angeordnet, der in Betriebsposition gezeigt ist. Er besitzt einen Positionierarm 14 mit darauf festgelegten Kopfgrundplatten 15, die Magnetköpfe 16 in Dünnfilmtechnik tragen. Eine Schwenkachse 17 des Drehpositionierers ist in Fig. 1 eben noch sichtbar. Ihr Abstand zu den Magnetköpfen 16 bedingt einen Schwenkradius 18, der strichpunktiert angedeutet ist.

Der in Fig. 1 gezeigte Teilschnitt des Deckels 2 läßt die Deckelform erkennen, die einerseits so gewählt ist, daß sie den Plattenstapel in geringem Abstand umschließt, andererseits aber für die Bewegung des Positionierarmes 14 des Drehpositionierers auch zum Abtasten von Randspuren des Plattenstapels 11 noch ausreichend Spielraum läßt. Dabei ist der Deckel 2 im Bereich des Drehpositionierers 13 von der Stirnseite her eingeschnürt, so daß sich hier eine Möglichkeit ergibt, in der freibleibenden Ecke auf der Oberfläche des Deckels 2 Hybridbaugruppen 19 anzuordnen, die in der Zeichnung nur durch strichpunktierte Linien angedeutet sind, da sie keinen unmittelbaren Teil des Gehäuses bilden.

Der in Fig. 1 gewählte Teilschnitt zeigt aber auch die Bedeutung der gewählten Lage und Neigung der Trennebene A. Einerseits ist diese so gelegt, daß alle konstruktiv wesentlichen Gehäusefunktionen in der Tragschale 1 vereinigt sind, das gilt insbesondere für die beidseitige Lagerung des Plattenstapels 11, aber auch die Befestigung des Drehpositionierers. Andererseits ist die Trennebene A möglichst nahe an und parallel zur Achse des Plattenstapels 11 gelegt und außerdem um den Winkel α geneigt, so daß die Einbautiefe für den Drehpositionierer 13 hinsichtlich Fertigung und Montage optimiert ist. Damit wird mit diesem Aufbauprinzip eine gute Zugänglichkeit der funktionsbestimmenden Bauteile des Magnetplattenspeichers erzielt.

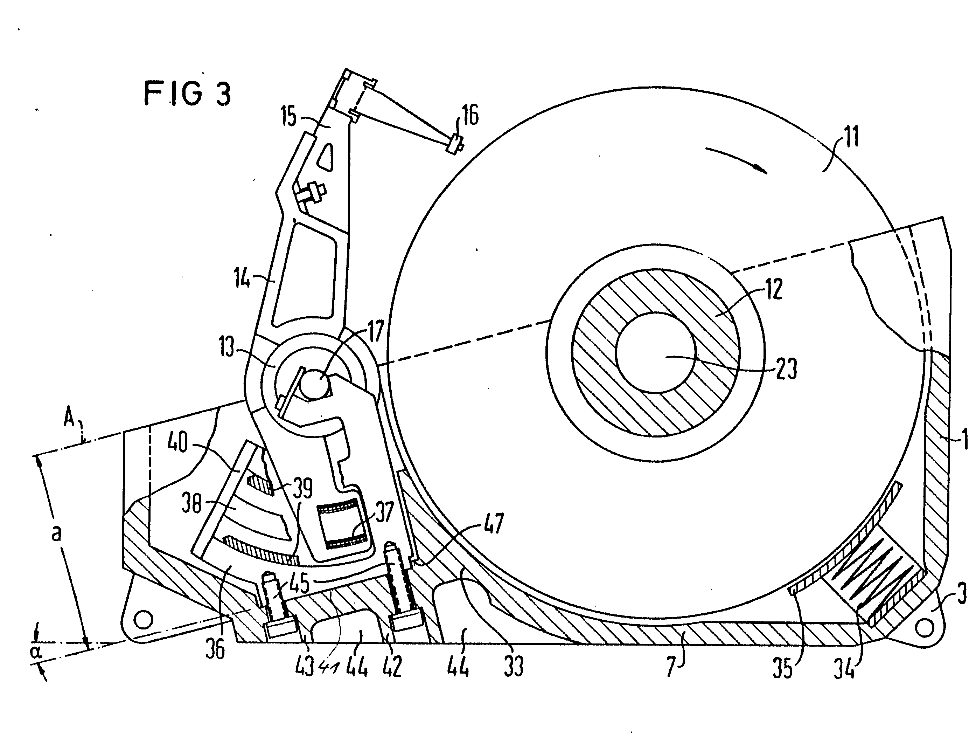

Dies wird nun im einzelnen anhand der Fig. 2 und 3 näher erläutert. Fig. 2 zeigt einen Schnitt durch das Gehäuse entlang der in Fig. 1 gezeigten Schnittlinie II, II, wobei aus Gründen der Übersichtlichkeit der Maßstab vergrößert, der Deckel 2 weggelassen und der Plattenstapel 11 im wesentlichen bis auf die Lagerstellen als Ansicht gezeigt ist. Dies soll auch verdeutlichen, daß der Plattenstapel 11 als fertig montierte Baugruppe in die Tragschale 1 eingesetzt wird.

Dieser Schnitt durch die Tragschale 1 verdeutlicht ihre wannenförmige Gestalt mit zwei, zur Stirnwand 7 senkrecht stehenden Seitenteilen, dem Tragschalenboden 20 und der Tragschalenoberseite 21. Jedes Seitenteil besitzt eine Lagerstelle für den Plattenstapel 11. Da der Plattenstapel 11 im vorliegenden Fall als eine fertig vormontierte Einheit angesehen wird, erscheint es hier nicht notwendig, seinen konstruktiven Aufbau in allen Einzelheiten zu erläutern. Deshalb mag es genügen, darauf hinzuweisen, daß eine Mehrzahl von Speicherplatten 23 auf der Nabe 12 in vorgegebenem Abstand festgelegt ist. Koaxial zur Nabe 12 angeordnet und mit ihr fest verbunden, ist eine Spindel 23 vorgesehen, die an beiden Enden Spindelzapfen aufweist, die Kugellager 24 bzw. 25 mit Festsitz tragen. Auf die Außenringe dieser Kugellager ist jeweils eine Lagerbuchse 26 bzw. 27 mit Festsitz aufgepreßt. Der Tragschalenboden 20 weist als Aufnahmefläche für die erste Lagerbuchse 26 einen senkrecht zum Rand der Tragschale 1 stehenden und nach dieser Seite hin geöffneten Schlitz 46 auf, dessen nach innen gerichteter Grund als 180°-Bohrung ausgeführt ist. Die zugeordnete Lagerbuchse 26 hat dementsprechend eine ebensolche Zentrierfläche und ist parallel zum Rand der Tragschale 1 abgeschnitten.

Die auf der gegenüberliegenden Seite des Plattenstapels 11 angeordnete zweite Lagerbuchse 27 trägt auf ihrer nach außen weisenden Stirnfläche eine Membranfeder 28, bestehend aus einer runden Federscheibe und einer zentral angeordneten, nach außen weisenden Kopfplatte mit einer Zentralbohrung. Der Vollständigkeit halber sei darauf hingewiesen, daß die Nabe 12 des Plattenstapels 11 als Hohlkörper ausgebildet ist und einen hier nicht dargestellten Innenmotor zum Antrieb des Plattenstapels aufnimmt.

Diese Baueinheit wird fertig vormontiert in die Tragschale 1 eingesetzt. Dabei wird die erste Lagerbuchse 26 in den beschriebenen, in den Tragschalenboden 20 eingefrästen Schlitz 46 eingeführt, dort zentriert und mit Hilfe von Befestigungsschrauben 29 an dem Tragschalenboden festgelegt. Dieser Lagerstelle gegenüberliegend weist die Tragschalenoberseite 21 eine zur Achse des Plattenstapels 11 konzentrische Zentralbohrung auf, die eine weitere Befestigungsschraube 30 aufnimmt, mit der die Kopfplatte der Membranfeder 28 an der Tragschalenoberseite festgelegt wird.

In diesem Zusammenhang sei noch auf eine Besonderheit der Lagergestaltung im Tragschalenboden 20 hingewiesen. Eingangs wurde die elastische Dichtung 10 beschrieben, die als umlaufender Ring in der Trennebene das Gehäuse abdichtet. Diese Dichtung kann so ausgebildet sein, daß sie, wie aus Fig. 1 bzw. 2 erkennbar, zusätzlich im Bereich der Lagerstelle des Plattenstapels 11 im Tragschalenboden 20 ein ringförmig ausgebildetes Ansatzstück aufweist. Dieses ist in den Tragschalenboden 20 hineingeklappt, so daß es den Umfang der ersten Lagerbuchse 26 dicht umschließt. Dieses Ansatzstück der Dichtung 10 ist durch einen Druckring 31 formschlüssig abgedeckt. Der Druckring 31 ist mit Befestigungsschrauben 32 am Tragschalenboden 20 festgelegt.

Fig. 3 zeigt analog zu Fig. 1 eine Ansicht des Magnetplattenspeichers von unten, jedoch nun mit aufgeschnittener Tragschale 1 und weiteren Einzelheiten der Stirnwand 7 der Tragschale 1 und der Befestigung des Drehpositionierers 13. Zunächst weist die Stirnwand 7 einen senkrecht zur Trennebene A vorspringenden Mittelsteg 33 auf, dessen dem Plattenstapel 11 zugewandte Seitenwand in geringem Abstand der äußeren Kontur der Magnetplatten 22 des Plattenstapels 11 folgt, während die andere Seitenwand senkrecht zur Trennebene verläuft. Dieser Mittelsteg 33 unterteilt den durch die Tragschale 1 gebildeten Innenraum und dient damit zunächst zur Versteifung des Tragschalenbodens 20 und der Tragschalenoberseite 21.

Die Formgebung dieses Mittelsteges erfüllt jedoch gleichzeitig noch eine weitere Funktion. Der den Plattenstapel 11 umgebende Innenraum des Gehäuses ist derart ausgebildet, daß er im wesentlichen den Plattenstapel 11 mit geringem radialen Abstand umschließt. Diese Formgebung dient dem Zweck, die bei umlaufendem Plattenstapel 11 auftretende Luftströmung in Umlaufrichtung zu verstärken und zu führen. Die umlaufende Luftströmung in dem Kanal zwischen dem Rand des Plattenstapels 11 und dem Gehäuse wird ausgenutzt, um die Luft im Inneren des Magnetplattenspeichers während seines Betriebes ständig zu filtern. Dazu ist in der rechten unteren Ecke der Tragschale 1 ein Luftfilter 34 quer zur Luftströmung angeordnet, das an der inneren Stirnfläche zur Verbesserung der Filterfunktion ein der Kontur des Plattenstapels 11 nachgebildetes Leitelement 35 aufweist.

Unmittelbar neben dem Mittelsteg 33 ist auf der dem Plattenstapel 11 abgewandten Seite der Drehpositionierer 13 an der Stirnwand 7 festgelegt. Der Drehpositionierer besitzt zu diesem Zweck einen U-förmig gestalteten Lagerbock 36, an dessen Schenkelenden die Schwenkachse 17 festgelegt ist. Der Drehpositionierer 13 kann nach dem Schwenkspulprinzip, wie im vorliegenden Ausführungsbeispiel, oder aber auch nach dem Magnetankerprinzip ausgebildet sein. Im vorliegenden Fall ist eine Schwenkspule 37 zwischen den Positionierarmen 14, einen Magnetkern 38 umfassend angeordnet. Dem Magnetkern 38 zugeordnet sind zwei Magnete 39, zwischen denen sich die Schwenkspule 37 beim Positioniervorgang bewegt. Als Magnetjoch ist eine Rückflußplatte 40 seitlich an dem Lagerbock befestigt.

Der Lagerbock 36 bildet damit gleichzeitig ein Teil des Magnetsystems für den Drehpositionierer 13.

Wie vorstehend ausgeführt, ist es ein Konstruktionsziel, die Eintauchtiefe a des Drehpositionierers 13 in die Tragschale 1 möglichst klein zu halten. Zum anderen ist es im Sinne unkritischer Toleranzen fertigungstechnisch auch einfacher, wenn die Trennebene A, d. h. der Rand der Tragschale 1, als Maßbezugsebene für den Anschraubbereich des Lagerbockes 36 des Drehpositionierers an der Stirnwand 7 herangezogen wird. Aus diesem Grunde ist die Stirnwand 7 in diesem Anschraubbereich nach innen gezogen und weist eine parallel zur Trennebene A verlaufende Anschraubfläche auf. Diese Anschraubfläche 41 ist mit Ansätzen 47 in die Stirnwand 7 eingeschnitten, so daß der Lagerbock 36 zu dieser Fläche zentriert werden kann.

Der als Baugruppe fertig vormontierte Drehpositionierer 13 wird in Montageposition, die in Fig. 3 dargestellt ist, in die Tragschale 1 eingesetzt. In dieser Position, in der die Positionierarme 14 mit einem Anschlag an einen der Schenkel des Lagerbockes 36 anliegen, liegen die Magnetköpfe 16 frei außerhalb des Plattenstapels 11. Dies ist eine wesentliche Montageerleichterung, da der Einschwenkvorgang erst ausgeführt wird, wenn der Drehpositionierer bereits fest in der Tragschale 1 verankert ist.

Diese Gestaltung der Stirnwand 7 im Anschraubbereich des Drehpositionierers 13 bildet die Möglichkeit, auf der Außenseite senkrecht zur Trennebene verlaufende Stege 42 bzw. 43 vorzusehen, die zusammen mit dazu senkrecht liegenden Versteifungsrippen 44 die Stirnwand 7 im Anschraubbereich des Drehpositionierers besonders versteifen. Die genannten Stege 42 bzw. 43 weisen Durchgangsbohrungen auf, die Befestigungsschrauben 45 aufnehmen, mit denen der Lagerbock 36 an der Stirnwand 7 festgelegt ist.

## Patentansprüche

1. Gehäuse für einen Magnetplattenspeicher, der einen beidseitig in dem in eine wannenförmige Tragschale (1) und einen Deckel (2) unterteilten Gehäuse gelagerten und durch einen Motor angetriebenen Plattenstapel (11), sowie eine als Drehpositionierer (13) ausgebildete Magnetkopfpositioniereinrichtung aufweist, deren Drehachse parallel zur Drehachse des Plattenstapels angeordnet ist, dadurch gekennzeichnet, daß das Gehäuse längs einer zu den Achsen des Plattenstapels (11) und des Drehpositionierers (13) parallelen Trennebene (A) derart in die Tragschale (1) und den Deckel (2) unterteilt ist, daß beide Lagerstellen für den Plattenstapel eben noch innerhalb von Seitenwänden (20, 21) der Tragschale liegen, jedoch die Eintauchtiefe (a) des Drehpositionierers in die Tragschale möglichst klein ist, daß die Tragschale als Boden eine im ganzen um einen Winkel ($\alpha$) gegen die Trennebene geneigte Stirnwand (7) aufweist, deren Innenseite im Anschraubbereich des Drehpositionierers eine parallel zur Trennebene ausgerichtete Anschraubfläche (41) besitzt und deren Außenseite in diesem Anschraubbereich nach außen vorspringende, zu der Anschraubfläche im wesentlichen senkrecht stehende Stege (42, 43) aufweist.

2. Gehäuse für einen Magnetplattenspeicher nach Anspruch 1 für einen als Baugruppe vormontierten Plattenstapel mit einer beidseitig gelagerten Spindel (23), dadurch gekennzeichnet, daß zum Lagern der Spindel (23) des Plattenstapels (11) in der Tragschale (1) in der einen Seitenwand (20) dieser Tragschale ein zu der Trennebene (A) senkrecht verlaufender und zur Trennebene hin offener Schlitz (46) mit einer 180°-Bohrung als Zentrierfläche am von der Trennebene abgewandten Ende vorgesehen ist, in dem das eine Ende der Spindel mit einer darauf festgelegten Lagerbuchse (26), von der Trennebene her eingeschoben, festgelegt ist und daß eine koaxiale Zentralbohrung in der anderen Seitenwand (21) vorgesehen ist, die eine Verspannschraube (30) zum Festlegen des anderen Endes der Spindel aufnimmt.

3. Gehäuse für einen Magnetplattenspeicher nach Anspruch 1 oder 2 zum Aufnehmen des als Baugruppe vormontierten Drehpositionierers (13), dadurch gekennzeichnet, daß der Drehpositionierer (13) einen U-förmig ausgebildeten Lagerbock (36) aufweist, an dessen Schenkelenden eine Schwenkachse (17) des Drehpositionierers gelagert ist und dessen Bodenfläche mit Befestigungsschrauben (45) an der Anschraubfläche (41) der Stirnwand (7) festgelegt ist.

4. Gehäuse für einen Magnetplattenspeicher nach Anspruch 3, dadurch gekennzeichnet, daß am Außenrand der Anschraubfläche (41) Ansätze (47) zum Ausrichten des Lagerbockes (36) bezüglich dieser Anschraubfläche vorgesehen sind, die dadurch gebildet sind, daß die Anschraubfläche in die Innenseite der Stirnwand (7) eingeschnitten ist.

5. Gehäuse für einen Magnetplattenspeicher nach Anspruch 3 oder 4, dadurch gekennzeichnet, daß die Neigung ($\alpha$) der Anschraubfläche (41) zur Außenseite der Stirnwand (7) in Verbindung mit dem Aufbau des Drehpositionierers (13) derart gewählt ist, daß der Drehpositionierer in die Tragschale (1) einsetzbar ist, ohne daß Magnetköpfe (16) des Drehpositionierers in dieser Montageposition mit Magnetplatten (22) des Plattenstapels (11) in Eingriff kommen.

6. Gehäuse für einen Magnetplattenspeicher nach einem der Ansprüche 1 bis 5, dadurch gekennzeichnet, daß die Stirnwand (7) der Tragschale (1) einen zwischen dem Drehpositionierer (13) und dem Plattenstapel (11) in den Innenraum der Tragschale hineinragenden und diesen unterteilenden Mittelsteg (33) zur Versteifung der Seitenwände (20, 21) der Tragschale aufweist.

7. Gehäuse für einen Magnetplattenspeicher nach Anspruch 6, dadurch gekennzeichnet, daß auf der Außenseite der Stirnwand (7) im Anschraubbereich des Drehpositionierers (13) quer zu den Stegen (42, 43) verlaufende Rippen (44) zur weiteren Versteifung vorgesehen sind.

8. Gehäuse für einen Magnetplattenspeicher nach Anspruch 6 oder 7, dadurch gekennzeichnet, daß der Deckel (2) und der Mittelsteg (33) jeweils in der dem Plattenstapel zugekehrten Fläche eine Innenkontur aufweisen, die dem Außendurchmesser des Plattenstapels angeglichen ist und diesen mit geringem Abstand zum Bilden eines Strömungskanals für die während des Betriebs des Plattenspeichers verwirbelte Luft umfaßt und daß in einer Ecke der Tragschale (1) quer zu diesem Strömungskanal ein Luftfilter (34, 35) angeordnet ist.

9. Gehäuse für einen Magnetplattenspeicher nach Anspruch 8, dadurch gekennzeichnet, daß der Deckel (2) entsprechend dieser Innenkontur im Schwenkbereich des Drehpositionierers (13) eine Einschnürung aufweist, an deren stirnseitiger Außenfläche Hybridbaugruppen (19) angeordnet sind.

10. Gehäuse für einen Magnetplattenspeicher nach einem der Ansprüche 1 bis 9, dadurch gekennzeichnet, daß die Randflächen von Tragschale (1) und Deckel (2) im Bereich der Trennebene (A) in einem Teil des Querschnitts unmittelbar zusammenstoßen und im restlichen Teil des Querschnitts eine Nut gebildet ist, in die eine umlaufende Dichtung (10) eingelegt ist, so daß Deckel und Tragschale sowohl staubdicht als auch den Innenraum gegenüber hochfrequenten Störsignalen abschirmend miteinander verbunden sind.

## Claims

1. A housing for a magnetic disc store which comprises a stack of discs (11) which is mounted at two ends in the housing — which is divided into a trough-shaped supporting shell (1) and a cover (2) — and which is driven by a motor, and which comprises a magnetic head positioning device which consists of a rotary positioner (13) and whose axis of rotation extends in parallel to the axis of rotation of the stack of discs, characterised in that along a parting plane (A) which is parallel to the axes of the stack of discs (11) and the rotary positioner (13), the housing is divided into the supporting shell (1) and the cover (2), in such manner that the two bearings for the stack of discs are located within the side walls (20, 21) of the supporting shell but the penetration depth (a) of the rotary positioner into the supporting shell is a small as possible, that as a base the supporting shell comprises an end wall (7) which is inclined as a whole in relation to the parting plane by an angle ($\alpha$) and whose inside, in the screw-on area of the rotary positioner, comprises a locating surface (41) aligned parallel to the parting plane, and whose outside, in this screw-on area, is provide with outwardly projecting ribs (42, 43) which are fundamentally at right angles to the locating surface.

2. A housing for a magnetic disc store as claimed in claim 1, for a stack of discs, pre-assembled as a module, with a spindle (23) mounted at two ends, characterised in that for the mounting of the spindle (23) of the stack of discs (11) in the supporting shell (1), the first side wall (20) of this supporting shell contains a slot (46), which extends at right angles to the parting plane (A) and is open towards the parting plane, with a 180° bore as centering surface at the end facing away from the parting plane, in which one end of the spindle is fixed with a bearing bush (26) fixed thereto, inserted from the direction leading away from the parting plane, and that a coaxial central bore is provided in the other side wall (21) which accommodates a fixing screw (30) which fixes the other end of the spindle.

3. A housing for a magnetic disc store as claimed in claim 1 or 2 for the accommodation of the rotary positioner (13) which is pre-assembled as a module, characterised in that the rotary positioner (13) comprises a U-shaped bearing block (36) at the ends of the side walls of which a pivot axle (17) of the rotary positioner is mounted and whose base surface is fixed by fixing screws (45) to the locating surface (41) of the end wall (7).

4. A housing for a magnetic disc store as claimed in claim 3, characterised in that a the outer edge of the locating surface (41) shoulder components (47) are provided which align the bearing block (36) in relation to this locating surface and which are formed by virtue of the fact that the locating surface is inset into the inside of the end wall (7).

5. A housing for a magnetic disc store as claimed in claim 3 or 4, characterised in that the inclination ($\alpha$) of the locating surface (41) in relation to the outside of the end wall (7), in association with the construction of the rotary positioner (13), is selected to be such that the rotary positioner can be inserted into the supporting shell (1) without the magnetic heads (16) of the rotary positioner engaging with magnetic discs (22) of the stack of discs (11) in this assembly position.

6. A housing for a magnetic disc store as claimed in one the claims 1 to 5, characterised in that the end wall (7) of the supporting shell (1) is provided with a central rib (33) which projects between the rotary positioner (13) and the stack of discs (11) into the interior of the supporting shell, which it divides, and which serves to stiffen the side walls (21) of the supporting shell.

7. A housing for a magnetic disc store as claimed in claim 6, characterised in that on the outside of the end wall (7) in the screw-on area of the rotary positioner (13), fins (44) which extend transversely to the ribs (42, 43) are provided for further stiffening.

8. A housing for a magnetic disc store as claimed in claim 6 or 7, characterised in that an area facing towards the stack of discs the cover (2) and central rib (33) each have an inner contour which matches the outer diameter of the stack of discs which it envelopes at a short distance so as to form a flow channel for the air which circulates during the operation of the disc store, and that an air filter (34, 35) is arranged in a corner of the supporting shell (1) transversely to this flow channel.

9. A housing for a magnetic disc store as claimed in claim 8 characterised in that in accordance with this inner contour, in the pivoting area of the rotary positioner (13) the cover (2) is provided with a constriction, on whose outer end face hybrid assemblies (19) are arranged.

10. A housing for a magnetic disc store as claimed in one of the claims 1 to 9, characterised in that in the region of the parting plane (A) the edge surfaces of supporting shell (1) and cover (2) directly abut in a part of the cross-section and in the remaining part of the cross-section a groove is formed into which a peripheral seal (10) is inserted in such manner that cover and supporting shell are connected to one another both so as to be dust-tight and so as to screen the interior from high-frequency interference signals.

### Revendications

1. Boîtier pour une mémoire à disques magnétiques, comportant une pile (11) de disques, qui est montée rotative par les deux côtés dans ce boîtier, lequel est divisé en une pièce de support en forme de cuvette (1) et un couvercle (2), et qui est entraînée par un moteur, ainsi qu'un dispositif de positionnement de tête magnétique, réalisé comme un positionneur rotatif (13), dont l'axe de rotation est parallèle à l'axe de rotation de la pile de disques, caractérisé en ce que sa division en cuvette de support (1) et en couvercle (2) est définie par un plan de séparation (A) qui est parallèle aux axes de la pile (11) de disques et du positionneur rotatif (13), que les deux paliers pour la pile de disques sont tout juste situés encore à l'intérieur de parois latérales (20, 21) de la cuvette, mais que la profondeur d'encastrement (a) du positionneur rotatif dans la cuvette est aussi faible que possible, que la cuvette de support présente, en tant que fond, une paroi d'extrémité (7) qui est inclinée en totalité d'un angle (α) par rapport au plan de joint et dont le côté intérieur possède, dans la zone de fixation par vis du positionneur rotatif, une surface de fixation (41) qui est disposée parallèle au plan de joint, et dont le côté extérieur présente, dans cette zone de fixation, des nervures (42, 43) faisant saillie vers l'extérieur et qui sont essentiellement perpendiculaires à la surface de fixation.

2. Boîtier selon la revendication 1, pour une pile de disques préassemblée comme un ensemble et comportant une broche (23) montée rotative par les deux côtés, caractérisé en ce que, pour le montage rotatif de la broche (23) de la pile (11) de disques dans la cuvette de support (1), une paroi latérale (20) de cette cuvette présente une échancrure (46) perpendiculaire au plan de joint et s'ouvrant dans ce plan, avec une surface de centrage s'étendant suivant un arc de 180° à l'extrémité de l'échancrure qui est éloignée du plan de séparation, échancrure dans laquelle est montée une extrémité de la broche à l'aide d'une douille (26) fixée sur elle et qui est introduite dans l'échancrure à partir du plan de joint, et que l'autre paroi latérale (21) présente un trou central coaxial, recevant une vis de serrage (30) pour le montage de l'autre extrémité de la broche.

3. Boîtier selon la revendication 1 ou 2, conçu pour recevoir un positionneur rotatif (13) préassemblé comme un ensemble, caractérisé en ce que le positionneur rotatif (13) possède un support (36) en U, aux extrémités des ailes duquel est monté rotatif un axe de pivotement (17) du positionneur et dont le fond est fixé par des vis (45) à la surface de fixation (41) de la paroi d'extrémité (7).

4. Boîtier selon la revendication 3, caractérisé en ce que des saillies (47) sont formées sur le bord extérieur de la surface de fixation (41) en vue de l'alignement du support (36) par rapport à cette surface de fixation par vis, saillies qui sont créées lors de l'usinage de la surface de fixation dans le côté intérieur de la paroi d'extrémité (7).

5. Boîtier selon la revendication 3 ou 4, caractérisé en ce que l'inclinaison (α) de la surface de fixation (41), par rapport au côté extérieur de la paroi d'extrémité (7), est choisie, également en fonction de la construction du positionneur rotatif (13), de manière que le positionneur rotatif puisse être mis en place dans la cuvette de support (1) sans que des têtes magnétiques (16) du positionneur viennent en contact, dans cette position de montage, avec des disques magnétiques (22) de la pile (11).

6. Boîtier selon une des revendications 1 à 5, caractérisé en ce que la paroi d'extrémité (7) de la cuvette de support (1) présente une nervure médiane (33) qui fait saillie dans l'espace intérieur de la cuvette entre le positionneur rotatif (13) et la pile (11) de disques, en partageant cet espace intérieur, nervure médiane qui sert à renforcer les parois latérales (20, 21) de la cuvette.

7. Boîtier selon la revendication 6, caractérisé en ce que le côté extérieur de la paroi d'extrémité (7) présente, dans la zone de fixation par vis du positionneur rotatif (13), des nervures supplémentaires (44) qui s'étendent transversalement aux nervures (42, 43) et qui servent à accroître le renforcement.

8. Boîtier selon la revendication 6 ou 7, caractérisé en ce que le couvercle (2) et la nervure médiane (33) possèdent chacun, sur la face dirigée vers la pile de disques, un profil intérieur qui est adapté au diamètre extérieur de la pile de disques et qui entoure cette pile à faible distance en vue de la formation d'un canal d'écoulement pour l'air mis en turbulence pendant le fonctionnement de la mémoire à disques, et qu'un filtre à air (34, 35) est installé transversalement à ce canal d'écoulement dans l'un des angles de la cuvette de support (1).

9. Boîtier selon la revendication 8, caractérisé en ce que le couvercle (2) présente, en conformité avec ledit profil intérieur, un rétrécissement dans la zone de pivotement du positionneur rotatif (13), avec disposition d'ensembles hybrides (19) sur la surface extérieure de la partie rétrécie du boîtier, sur le côté de la paroi d'extrémité de celui-ci.

10. Boîtier selon une des revendications 1 à 9, caractérisé en ce que les surfaces des bords de la cuvette de support (1) et du couvercle (2) sont appliquées directement l'une contre l'autre, au droit du plan de séparation (A), par une partie de la section de ces bords, et qu'une rainure est formée dans la partie restante de la section, rainure dans laquelle est disposé un joint périphérique (10), si bien que le couvercle et la cuvette sont assemblés à la fois de façon étanche à la poussière et de manière à assurer un blindage du volume intérieur vis-à-vis de signaux de parasites de haute fréquence.

FIG 1

0 151 256

# FIG 2

FIG 3

0 151 256